# EUROPEAN PATENT APPLICATION

(11) **EP 2 031 927 A1**
(43) Date of publication of application: **04.03.2009**
(21) Application number: 07253003.3
(22) Date of filing: 31.07.2007
(51) Int. Cl.: H04W 48/16

(54) **Method and apparatus for modifying a network search strategy**

(71) Applicant: TTPCOM Limited, Royston, Hertfordshire, SG8 6HQ (GB)
(72) Inventor: Nangle, Peter, Melbourn, Hertfordshire SG8 6BL (GB)
(74) Representative: Wardle, Callum Tarn

(57) **Abstract**

A mobile device (1) arranged to effect wireless communication with a plurality of communication networks, the mobile device comprising position location means (5) arranged to determine the location of the mobile device and a data processor (8) arranged to access a database of network parameters (7), determine if the database includes an entry corresponding to the determined location of the mobile device (22) and if there is such a corresponding database entry modify one or more parameters of a default network search strategy (24).

## Description

In the field of wireless communications the mobile devices increasingly have the capability to operate over several different networks. For example, a mobile device may be capable of utilising both the GSM system and also utilising a WiFi network. These different networks typically use one or more of different frequency spectrums, different modulation schemes and different encoding schemes. In a typical scenario the different networks operate entirely independently, both in technical terms and also in commercial terms, with different networks typically being in commercial competition with one another. Consequently, while a mobile device is connected with one of the available networks it is unlikely to be able to use that connection to obtain information about any other networks that may be available in the same locality.

In such circumstances the mobile devices are typically configured to perform a regular search for alternative networks. A known strategy for searching for alternative networks is to periodically activate electronic circuitry within the mobile device that enables other networks to be received. However, there is no guarantee that activating such circuitry will result in the discovery of a new available network, since there may simply be no service available on alternative networks in that particular locality. Since the mobile device typically operates within a restricted energy budget due to the device being typically powered by one or more batteries, repeatedly activating circuitry to search for alternative networks when there is no guaranteed likelihood of finding such alternative networks can be a waste of the limited energy resources of the mobile device.

Research and observation suggests that most users of mobile wireless devices spend a majority of their time in locations that they visit repeatedly. Examples of such locations might be the user's residence or regular place of work. Since the provision of the various networks is accomplished through physically fixed installations, such as fixed base stations, towers and antennae, the availability of the networks in any given location tends to be constant over a prolonged period of time. Consequently, a mobile device user that spends considerable periods of time within locations that have been previously visited will experience the same connectivity options as on previous visits.

According to an aspect of the present invention there is provided a method of determining a network search strategy comprising determining the location of a mobile device, checking a local database of network parameters for an entry corresponding to the determined location and if an entry is located causing the mobile device to modify at least one parameter of a default network search strategy.

The modified search parameter may comprise the time interval at which circuitry and/or software associated with a communications network within the mobile device is enabled. Additionally or alternatively, the time interval may be increased indefinitely such that the enablement of said circuitry and/or software within the mobile device is inhibited.

Preferably the network parameters corresponding to a given location include at least one of the availability of a communications network, the quality of service of a communications network, the number of times the same availability data was recorded for the location and the date and time at which at least the most recent data was recorded. Additionally, the modification of the first network search strategy parameter may be further dependent on the value of one or more of the stored network parameters.

Preferably the local database includes a number of known sequences of locations and the method further comprises checking if a determined location is included within a known sequence of locations and if so causing the mobile device to modify network search strategy parameter according to the network parameters for subsequent locations within the identified sequence.

If no database entry corresponding to the determined location is located the network parameters for the determined location may be recorded and a corresponding local database entry created.

If a database entry corresponding to the determined location is located then the database entry may be updated with the current network parameters for the determined location.

According to a second aspect of the present invention there is provided a mobile device arranged to effect wireless communication with a plurality of communication networks, the mobile device comprising position location means arranged to determine the location of the mobile device and a data processor arranged to access a local database of network parameters, determine if the database includes an entry corresponding to the determined location of the mobile device and if there is such a corresponding database entry modify one or more parameters of a default network search strategy.

The mobile device preferably further comprises one or more subsystems, each subsystem being arranged to enable communication with one or more of the plurality of communication networks, wherein the modified search parameter may comprise the time interval at which circuitry and/or software associated with a communications network within the mobile device is enabled. Additionally or alternatively, the time interval may be increased indefinitely such that the actuation of at least one of the subsystems is inhibited.

Preferably the network parameters for a given location include at least one of the availability of a communication network, the quality of service of a communications network, the frequency with which the communication network has been available at the location and the date and time of the most recent recordal of the parameter. The data processor may be arranged to modify a network search strategy parameter depending on the value of at least one of the stored network parameters.

The database preferably includes a number of known sequences of locations and the data processor is further arranged to check if the determined location is included within a known sequence and if so to modify the network search strategy parameter according to the stored network parameters of subsequent locations within the identified sequence.

If no database entry corresponding to the determined location is found in the database the data processor may be arranged to generate a new entry in the database for the determined location.

If a database entry corresponding to the determined location is found in the database the data processor may be arranged to update the corresponding database entry.

Embodiments of the present invention are described below, by way of illustrative example only, with reference to the accompanying drawings, of which:
Figure 1 schematically illustrates a generic mobile device according to an embodiment of the present invention; and
Figure 2 schematically illustrates possible modes of operation of the mobile device according to an embodiment of the present invention.

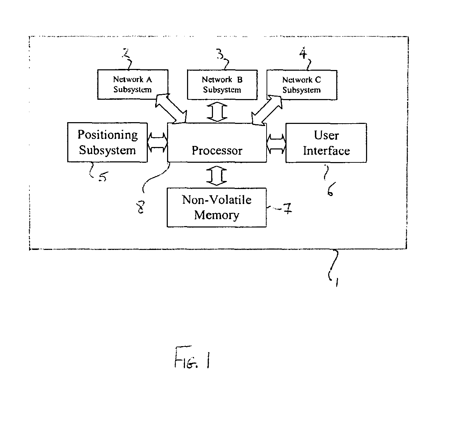

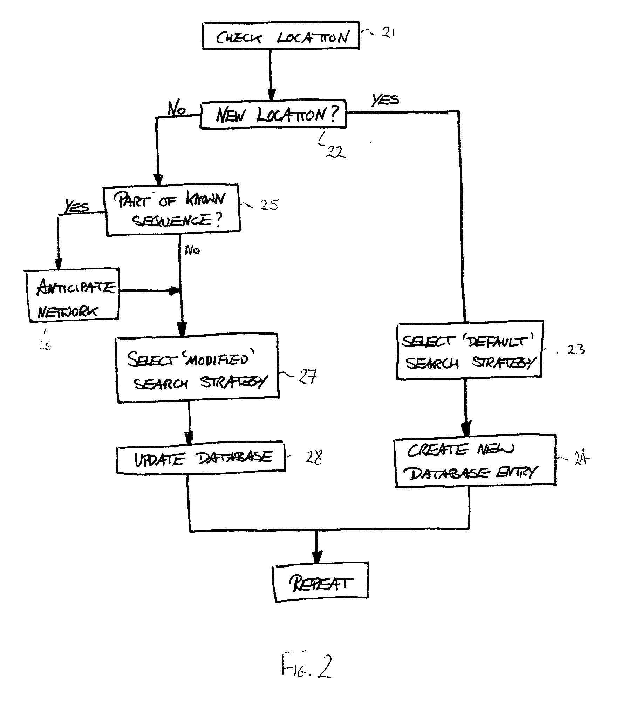

Figure 1 schematically illustrates a generic mobile device according to an embodiment of the present invention. The mobile device 1 includes a plurality of network subsystems, network A subsystem 2, network B subsystem 3 and network C subsystem 4, with each network subsystem providing the capability of accessing a different communications network. The design and composition of the network subsystems will be known to those skilled in the art and whilst varying in certain respects depending upon the network to be communicated with will generally include such components as an antennae, a signal decoder and encoder, software and appropriate signal conditioning circuitry. Examples of possible different networks that the network subsystems may be arranged to communicate with include GSM, 3G, GPRS, WiFi and Bluetooth. A person skilled in the art will be familiar with the general design of mobile devices capable of connection to several different communication networks, with such mobile devices being commonly referred to as multi-mode devices. Alternatively, a single, multi-configurable subsystem may be provided that is capable of being reconfigured (for example by software) to enable the device to communicate with a plurality of networks. The mobile device 1 illustrated in Figure 1 also includes a positioning subsystem 5 that is arranged to determine the location of the mobile device. For example, the positioning subsystem 5 may be arranged to be capable of determining the location of the mobile device using a satellite positioning system (GPS), possibly with or without the assistance from the communication network base station signals. Such positioning subsystems are known to those skilled in the art. Also included within the mobile device 1 is one or more user interfaces 6, such as a keypad or touch sensitive display screen, which again will be known to those skilled in the art. The mobile device includes non-volatile memory 7 provided for the storage of electronic data for subsequent retrieval at a later date. Finally, a data processor 8 is provided within the mobile device 1, the processor 8 being in communication with each of the network subsystems, the positioning subsystem, the user interface(s) and the non-volatile memory. A mode of operation of a mobile device according to an embodiment of the present invention is schematically illustrated into Figure 2. At an initial step 21 the mobile device 1 determines its location. This is accomplished using the positioning subsystem 5. The determined location is transmitted to the processor 8 of the mobile device, which subsequently accesses a database stored in the non-volatile memory 7. The database contains records that define a location and values that represent features of each of the communication access networks that the mobile device can access at that particular location. For example, the record fields within the database may include location, communication network availability (which may include signal strength), the number of times the location has been visited by the mobile device and the date and possibly time that which previous visits to the location by the mobile device occurred. The data processor 8 is thus capable of checking whether or not the mobile device has visited the determined location previously or not, as indicated in step 22 on Figure 2. As will be appreciated by those skilled in the art, an exact match of determined location with a previously visited location stored in the database is not necessarily required.

If no match is found in the database for the determined position of the mobile device, then the data processor 8 selects a "default" network search strategy, indicated at step 23 in Figure 2. The default network search strategy may, for example, comprise a typical network search strategy known in the art in relation to multi-mode mobile devices in which the individual network subsystems are operated to determine the availability of their respective communication networks. A typical default network search strategy will involve the periodic or repeated actuation of each of the network subsystems, which typically consumes relatively large amount of the mobile device's stored energy. In embodiments of the present invention, as illustrated at step 24 in Figure 2, the results of the network search, i.e. the availability of each of the communication networks, for the determined mobile device location is used to create a new database entry indexed under the new location. The creation and storage of the database entry is processed by the data processor 8 of the mobile device.

If it is determined that the location of the mobile device corresponds to an existing entry in the stored database then the data processor 8 modifies one or more parameters of the network search strategy according to the data held in the existing location database entry, as indicated in step 27 on Figure 2. For example, the data processor of the mobile device may control the individual network subsystems to change the frequency in comparison with the frequency of the "default" network search strategy with which the individual network subsystems are enabled in the hope of making a connection to a respective communication networks. The modification of the network search strategy is preferably based on a weighted combination of the frequency that the same result was obtained at the determined location, the date and time of the most recent observation at the given location and results from nearby locations. Further examples of modified network search strategies include never activating the network subsystems for a particular network type because that network has never been previously available at the given location and periodically activating particular network subsystems on a less regular basis. A further parameter that may be modified in embodiments of the present invention is the order in which particular network subsystems are activated. For example, if the database entry for a given location indicates that a 3G service is rarely available but a GPRS service usually is, then the data processor may cause the GPRS subsystem to be activated in preference to the 3G subsystem. It will be appreciated that the number of network search strategy parameters that may be modified can vary within different embodiments of the present invention, together with the applicable logic for modifying the respective parameters. However, within all embodiments of the present invention the network search strategy will be modified according to a number of prioritised criteria provided by the stored location database entries.

The above discussion assumes a simple case of a particular network either being available at a determined location or not for ease of explanation of the present invention. However, embodiments of the present invention also encompass the more likely scenario that the quality of service for a particular network service will be used in modifying the network search strategy. The quality of service may be quantified by commonly used measures such as available data rate or required power levels. In embodiments of the invention the search strategy may be modified in a progressive manner according to the determined or expected quality of service. For example one or more thresholds may be set for a quality of service, with the failure to reach a certain threshold causing the search strategy to be modified accordingly.

In further embodiments of the invention, entries for the location database may be added to the database without requiring the mobile device to have previously visited the location. For example one or more database locations may be downloaded from a server to a user's mobile device for a fee. Other means of loaded pre-recorded database entries to a user's mobile device will be readily envisaged by the skilled person and are within the scope of the present invention.

Having modified the search strategy, the data processor 8 updates the database entry for the determined location to include the results of the network search for that given time and date. This is indicated at step 28 on Figure 2.

If the determined location of the mobile device is not a new location, then in preferred embodiments of the present invention the data processor 8 is caused to further examine the records held within the database on the non-volatile memory 7 to determine whether or not the location of the mobile device is within a known sequence of locations, as indicated at step 25 on Figure 2. As previously noted, it is common for users of mobile devices to repeatedly visit the same locations and as a consequence to carry their mobile devices during a journey that is regularly repeated, for example during a users daily commute between their home and place of work. The periodic determination of the location of a mobile device during such a journey generates a sequence of locations representative of the journey and it is these sequences that in preferred embodiments of the present invention are stored within the database records held on the non-volatile memory 7 of the mobile device. In preferred embodiments the identification and storage of a sequence of locations is accomplished automatically by the data processor 8 of the mobile device, although it will be appreciated that in other embodiments the manual indication that a location belongs to a given sequence may occur. If it is determined by the data processor 8 that the determined location of the mobile device has been both previously visited by the mobile device and falls within a known sequence of locations, i.e. journey, then the data processor 8 is capable of predicting the availability of the various network subsystems as the journey progresses. This is indicated at step 26 in Figure 2. For example, data processor 8 may in preferred embodiments be arranged to identify one or more of the network subsystems that will be available for the entirety of the remainder of the determined journey and thus cause the mobile device to utilise that particular communication network subsystem in preference to the other network subsystems. Equally, the data processor may be arranged to anticipate when a currently utilised network subsystem will no longer be available at a particular point in the journey and is thus able to control the network subsystems to perform the necessary change in communication network (hand-off) as required without any loss in communication to the user of the mobile device.

The location of the mobile device is periodically determined, with the periodicity being either a fixed time interval or being variable depending upon the network parameters for the previously determined locations, depending upon particular embodiments of the present invention. For example, if the database entry for a particular location indicates that the signal strength for a particular communication network is consistently good then the time interval between the subsequent location checks may be greater than if the signal strength is weak or variable.

It may be that a single visit to any location is insufficient for the purposes of modifying the network search strategy. Dynamic effects such as temporary loss of communication signals, interference from other communication signals and so forth may affect single data points. Consequently, in preferred embodiments of the present invention data recorded over a series of visits to the same location is recorded within the database and is used to determine the most likely or most successful network search strategy for that location.

In some embodiments of the present invention, the mobile device may modify the network search or connection strategy based on regulatory requirements. For example, there may be a regulatory requirement that voice capable mobile devices must be enabled to make emergency calls in given territories, in which case the search or connection strategy will be modified such that those network subsystems that allow such emergency calls to be made will only be utilised. In further embodiments the mobile device may be disabled from any form of communication with any network in certain locations, for example if the mobile device location corresponds to the location of a hospital or petrochemical installation where their could be limitations on the use of mobile devices for safety reasons. This would require further fields within the database stored on the non-volatile memory to associate given locations with the locations of such areas.

By modifying the behaviour of the mobile device in accordance with its geographical location and data previously collected at that location it is possible to greatly reduce the usage of the mobile devices limited energy reserves, as well as possibly to anticipate upcoming connectivity changes and enable or transfer wireless connections accordingly.

## Claims

1. A method of determining a network search strategy comprising determining the location of a mobile device, checking a database of network parameters for an entry corresponding to the determined location and if an entry is located causing the mobile device to modify at least one parameter of a default network search strategy.

2. The method of claim 1, wherein the modified search parameter comprises the time interval at which circuitry and/or software associated with a communications network within the mobile device is enabled.

3. The method of claim 2, wherein the time interval is increased indefinitely such that the enablement of said circuitry and/or software within the mobile device is inhibited.

4. The method of any preceding claim, wherein the network parameters corresponding to a given location include at least one of the availability of a communications network, the quality of service of a communications network, the number of times the same availability data was recorded for the location and the date and time at which at least the most recent data was recorded.

5. The method of claim 4, wherein the modification of the or each network search strategy parameter is further dependent on the value of one or more of the stored network parameters.

6. The method of any preceding claim, wherein the database includes a number of known sequences of locations and the method further comprises checking if a determined location is included within a known sequence of locations and if so causing the mobile device to modify the network search strategy parameter according to the network parameters for subsequent locations within the identified sequence.

7. The method of any preceding claims, wherein if no database entry corresponding to the determined location is located the network parameters for the determined location are recorded and a corresponding database entry created.

8. The method of any preceding claim, wherein one or more pre-created database entries are added to said database prior to the mobile device visiting the associated locations.

9. The method according to any preceding claim, wherein if a database entry corresponding to the determined location is located then the database entry is updated with the current network parameters for the determined location.

10. A mobile device arranged to effect wireless communication with a plurality of communication networks, the mobile device comprising position location means arranged to determine the location of the mobile device and a data processor arranged to access a database of network parameters, determine if the database includes an entry corresponding to the determined location of the mobile device and if there is such a corresponding database entry modify one or more parameters of a default network search strategy.

11. The mobile device of claim 10 further comprising one or more subsystems, each subsystem being arranged to enable communication with a different one of the plurality of communication networks, wherein the modified search parameter comprises the time interval at which circuitry &/or software associated with a communications network within the mobile device is enabled.

12. The mobile device of claim 11, wherein the time interval is increased indefinitely such that the actuation of at least one of the subsystems is inhibited.

13. The mobile device of any one of claims 10 to 12, wherein the network parameters for a given location include at least one of the availability of a communication network, the quality of available service, the frequency with which the communication network has been available at the location and the date and time of the most recent recordal of the parameter.

14. The mobile device of claim 13, wherein the data processor is arranged to modify a network search strategy parameter depending on the value of at least one of the stored network parameters.

15. The mobile device of any one of claims 10 to 14, wherein the database includes a number of known sequences of locations and the data processor is further arranged to check if the determined location is included within a known sequence and if so to modify the network search strategy parameter according to the network parameters of subsequent locations within the identified sequence.

16. The mobile device of any one of claims 10 to 15, wherein if no database entry corresponding to the determined location is found in the database the data processor is arranged to generate a new entry in the database for the determined location.

17. The mobile device of any one of claims 10 to 16, wherein if a database entry corresponding to the determined location is found in the database the data processor is arranged to update the corresponding database entry.
